# EUROPÄISCHE PATENTANMELDUNG

(11) **EP 2 743 134 A1**
(43) Veröffentlichungstag der Anmeldung: **18.06.2014**
(21) Anmeldenummer: 13197134.3
(22) Anmeldetag: 13.12.2013
(51) Int. Cl.: B60R 1/02

(54) **Spiegelsystem für Fahrzeuge**

(30) Priorität: 14.12.2012 DE 102012223267
(71) Anmelder: MEKRA LANG GmbH & Co. KG, 91465 Ergersheim (DE)
(72) Erfinder: Lang, Werner, 91465 Ergersheim (DE); Seiboth, Wolfgang, 91438 Bad Windsheim (DE); Centmayer, Stefan, 91465 Ergersheim (DE); Finkenberger, Elmar, 91587 Adelshofen (DE)
(74) Vertreter: Winter, Brandl, Fürniss, Hübner, Röss, Kaiser, Polte - Partnerschaft

(57) **Zusammenfassung**

Beschrieben wird ein Spiegel für Fahrzeuge, insbesondere für Nutzfahrzeuge, mit einer Spiegelschale (6), die eine Schnittstelle zu einer am Fahrzeug befestigbaren Halteeinrichtung (8, 10) aufweist; und einem Reflektionskörper (4), der an der Spiegelschale (6) angebracht ist, wobei die Spiegelschale (6) und der Reflektionskörper (4) nicht lösbar miteinander verbunden sind. Der Reflektionskörper (4) und der Spiegelschalenrand schließen bündig, also stufenfrei miteinander ab. Hierbei können der Reflektionskörper (4) und die Spiegelschale (6) mittels einer Klebeverbindung (18) verbunden sein.

## Beschreibung

Die vorliegende Erfindung betrifft ein Spiegelsystem für Fahrzeuge, insbesondere für Nutzfahrzeuge.

Ein Spiegelsystem der in Frage stehenden Art umfasst im Wesentlichen eine Spiegelschale, welche eine Schnittstelle zu einer am Fahrzeug befestigbaren Halteeinrichtung, beispielsweise in Form eines Spiegelarms oder Haltearms aufweist und wenigstens einen an der Spiegelschale angeordneten Reflektionskörper. Der Reflektionskörper wird hierbei im Bereich einer Aufnahmeöffnung an bzw. in der Spiegelschale angebracht, wobei die Spiegelschale mit Ausnahme der Aufnahmeöffnung im Wesentlichen geschlossenwandig ausgebildet ist.

Zur Anordnung oder Anbringung des Reflektionskörpers an der Spiegelschale ist eine Vielzahl von Vorgehensmöglichkeiten bekannt. Die letztendlich in der Praxis auszuwählende Befestigungsart hängt unter anderem von den vom Spiegel bzw. vom Spiegelsystem zu erfüllenden Funktionen und/oder gestalterischen Überlegungen und/oder produktionstechnischen Erfordernissen und/oder anderen Kriterien ab.

Es ist bekannt, eine Spiegelscheibe, welche eine Möglichkeit eines Reflektionskörpers ist, an einem Spiegelträger dadurch zu befestigen, dass eine Glaseinheit bestehend aus einem Träger und der Spiegelscheibe, die mit dem Träger verklebt ist, auf ein Spiegelgehäuse geclipst wird, wobei hierbei das Spiegelgehäuse als Spiegelträger definiert sei.

In der Praxis hat diese Vorgehensweise den Vorteil, dass im Reparaturfall die Scheibe durch Tauschen der geclipsten Glaseinheit einfach und schnell austauschbar ist.

Als zweite Möglichkeit sind sogenannte eingeschrumpften Gläser bekannt. Hierbei wird direkt nach dem Ausformungsprozess des Spiegelgehäuses die Scheibe in das Spiegelgehäuse gedrückt. Da das Material des Spiegelgehäuses durch den soeben erfolgten Ausformungsprozess, beispielsweise einem Spritzgussprozess noch weich ist und sich darüber hinaus im Zuge der Erkaltung durch einen Schrumpfprozess verkleinert, kann die Scheibe, welche an sich größer als die freie Öffnung des Spiegelgehäuses ist, trotz des Übermaßes in besagte freie Öffnung eingesetzt werden. Nach dem Erkalten des Spiegelgehäusematerials ist die Scheibe fest und unlösbar und in der Regel allseitig umschlossen.

Von Vorteil hierbei sind im Vergleich zu der aufgeclipsten Glaseinheit die verringerten Kosten. Nachteilig ist, dass für das Spiegelgehäuse auf ein spezielles Material, z.B. Polypropylen zurückgegriffen werden muss, welches in nachteiliger Weise geringe Dauerbeständigkeit, insbesondere gegen UV-Strahlung hat.

Konkrete Beispiele, wie ein Reflektionskörper, also beispielsweise eine Spiegelscheibe an einer Spiegelschale festgelegt werden kann, sind aus der DE 39 14 039 A1, der US 4,549,786 A1, der US 6,565,219 B1 und der DE 10 2008 046 981 B4 bekannt.

Ungeachtet davon, ob die Spiegelscheibe an dem Spiegelgehäuse festgeclipst wird, wie es etwa bei der DE 41 33 330 A1 bekannt ist, oder ob eine Einschrumpfung des Glases erfolgt, oder ob sonstige im Randbereich der Spiegelscheibe vorzusehende Haltemittel verwendet werden (Halteringe, Nuten, Rastnasen etc.), erfolgt beim Stand der Technik eine mehr oder minder große Abdeckung oder Abschattung der zur Verfügung stehenden Spiegelfläche. Mit anderen Worten, die randseitig vorhandenen Befestigungsmittel schränken die nutzbare reflektierende Fläche des Reflektionskörpers (des Spiegels) ein. Weiterhin ist es bei den Spiegelsystemen nach dem Stand der Technik notwendig, den eigentlichen Reflektionskörper auf einer Trägerplatte oder dergleichen anzubringen, um die auftretenden Haltekräfte auffangen zu können. Dies ist konstruktions- und Fertigungstechnisch aufwändiger und hat erhöhte Kosten zur Folge.

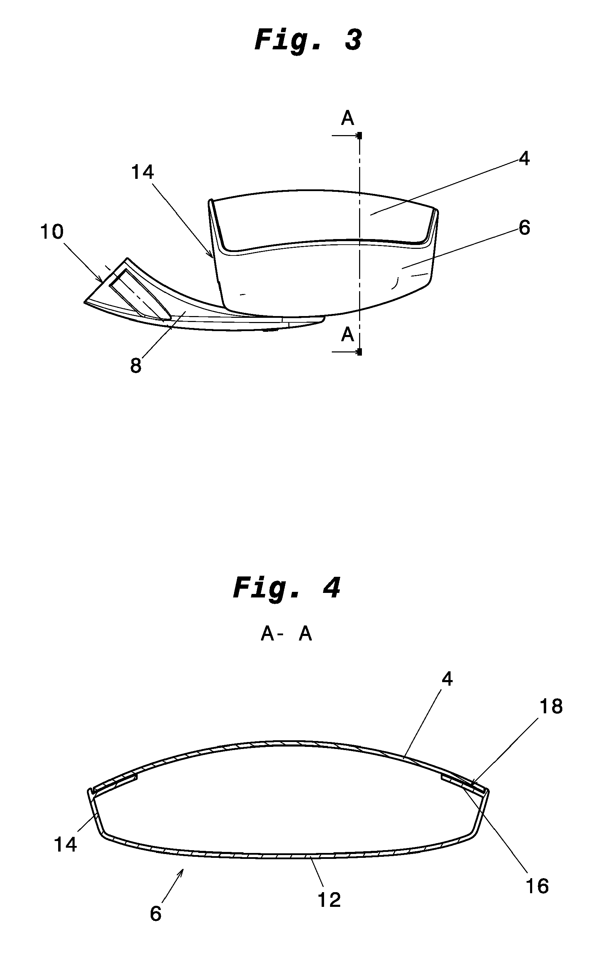

Aus der DE 202 20 035 U1 ist es bekannt, ein Spiegelelement in einem Spiegelgehäuse dadurch unlösbar zu fixieren, dass es hierin direkt, d.h. ohne Trägerplatte eingeklebt wird. Ausweislich der dortigen Fig. 3 sitzt hierbei das Spiegelelement mit seiner Rückseite an Vorsprüngen oder Stegen auf, welche in das Innere des Spiegelgehäuses vorragen, um eine Verklebungsfläche für das Spiegelelement zu bilden. Wie ebenfalls aus Fig. 3 der DE 202 20 035 U1 hervorgeht, ist die Bemaßung der Stege hierbei derart, dass das Spiegelelement zurückspringend im Gehäuse angeordnet ist, d.h. ein umlaufender Rand der Spiegelgehäuseöffnung steht über die Ebene des Spiegelelements hinaus vor. Dies ist insofern nachteilig, als sich an diesem vorstehenden Rand Verwirbelungen bilden können, die Schmutzniederschlag in dem Winkel zwischen Spiegelelement und überstehendem Rand fördern können. Auch erfolgt durch den überstehenden Rand eine Abdeckung oder Abschattung und damit Einschränkung der zur Verfügung stehenden reflektierenden Fläche des Spiegelelements, wenn auf dieses in einem spitzen Winkel von der Seite her geblickt wird.

Weitere Befestigungslösungen für ein Spiegelelement an einem Spiegelgehäuse, bei denen sich ebenfalls ein Rand, Überstand oder Wulst seitens des Spiegelgehäuses ergibt, was mit den soeben geschilderten Nachteilen einhergeht, sind z.B. aus der DE 71 39 343 U1, der DE 27 03 105 A1, der DE 1 867 785 U1, der DE 26 60 184 C2 oder der DE 69 39 961 U1 bekannt. Teilweise ist hierbei die Ausgestaltung des überstehenden Randes oder Wulstes sogar derart, dass dieser umfangsseitig in die reflektierende Fläche hineinragt, was die weiter oben geschilderten Nachteile (mehr oder minder große Abdeckung oder Abschattung der zur Verfügung stehenden Spiegelfläche und damit Einschränkung der nutzbaren reflektierende Fläche des Reflektionskörpers (des Spiegels)) noch verstärkt.

Aus der DE 202 20 035 U1 ist es bekannt, ein Spiegelelement in einem Spiegelgehäuse dadurch unlösbar zu fixieren, dass es hierin direkt, d.h. ohne Trägerplatte eingeklebt wird. Ausweislich der dortigen Fig. 3 sitzt hierbei das Spiegelelement mit seiner Rückseite an Vorsprüngen oder Stegen auf, welche in das Innere des Spiegelgehäuses vorragen, um eine Verklebungsfläche für das Spiegelelement zu bilden. Wie ebenfalls aus Fig. 3 der DE 202 20 035 U1 hervorgeht, ist die Bemaßung der Stege hierbei derart, dass das Spiegelelement zurückspringend im Gehäuse angeordnet ist, d.h. ein umlaufender Rand der Spiegelgehäuseöffnung steht über die Ebene des Spiegelelements hinaus vor. Dies ist insofern nachteilig, als sich an diesem vorstehenden Rand Verwirbelungen bilden können, die Schmutzniederschlag in dem Winkel zwischen Spiegelelement und überstehendem Rand fördern können. Auch erfolgt durch den überstehenden Rand eine Abdeckung oder Abschattung und damit Einschränkung der zur Verfügung stehenden reflektierenden Fläche des Spiegelelements, wenn auf dieses in einem spitzen Winkel von der Seite her geblickt wird.

Demgegenüber ist es Aufgabe der vorliegenden Erfindung, ein Spiegelsystem für Fahrzeuge der in Frage stehenden Art so auszugestalten, dass die vom Reflektionskörper zur Verfügung gestellte reflektierende Fläche oder Spiegelfläche weitestgehend vollständig, d.h. ohne randseitige Abschattungen zur Verfügung steht, wobei ein derartiges Spiegelsystem mit einem Minimum an Bauelementen und damit mit geringem konstruktionstechnischem und fertigungstechnischem Aufwand preiswert herstellbar ist.

Zur Lösung dieser Aufgabe schlägt die vorliegende Erfindung ein Spiegelsystem für Fahrzeuge, insbesondere für Nutzfahrzeuge vor, aufweisend eine mit Ausnahme einer Aufnahmeöffnung für wenigstens einen Reflektionskörper im Wesentlichen geschlossenwandigen Spiegelschale, die eine Schnittstelle zu einer am Fahrzeug befestigbaren Halteeinrichtung aufweist; und den Reflektionskörper, der an der Spiegelschale im Bereich der dortigen Aufnahmeöffnung angebracht und nicht lösbar mit dieser verbunden ist. Der Reflektionskörper und der Spiegelschalenrand schließen hierbei bündig miteinander ab.

Die sich hieraus ergebende Vorteile sind zunächst unter anderem ein optisch ansprechendes Erscheinungsbild, sowie das Fehlen von Kanten oder Hinterschneidungen, welche aerodynamisch ungünstig sein können und/oder zu Verwirbelungen und damit Schmutzansammlungen beitragen können. Darüber hinaus wird die vollständige Einsehbarkeit der reflektierenden Fläche (Spiegelfläche) des Reflektionskörpers auch aus schräg/seitlichen Blickwinkeln noch besser sichergestellt.

"Miteinander verbunden" ist hierbei im Rahmen der vorliegenden Erfindung dahingehend zu verstehen, dass Spiegelschale und Reflektionskörper (direkt) miteinander derart verbunden sind, dass keine zusätzlichen mechanischen Hilfsmittel insbesondere seitens der Spiegelschale notwendig sind. Hierdurch ist sichergestellt, dass keine derartigen mechanischen Hilfsmittel, also beispielsweise Rastnasen, Rastnuten oder dergleichen randseitig in die reflektierende Fläche des Reflektionskörpers hinein ragen, so dass das erfindungsgemäße Spiegelsystem die vollständige reflektierende Fläche des Reflektionskörpers ausnutzen kann.

Weiterhin bedeutet die Aussage, dass "Spiegelschale und Reflektionskörper nicht lösbar miteinander verbunden sind", dass die Verbindung zwischen Spiegelschale und Reflektionskörper unmittelbar aneinander ohne beispielsweise eine Trägerplatte für den Reflektionskörper erfolgt. Mit anderen Worten, die Anbringung des Reflektionskörpers an der Spiegelschale erfolgt ohne Zuhilfenahme zusätzlicher Stütz- oder Haltemittel insbesondere für den Reflektionskörper, so dass das erfindungsgemäße Spiegelsystem mit einem Minimum an Bauteilen herstellbar ist. Die Verbindung zwischen Spiegelschale und Reflektionskörper ist hierbei "nicht lösbar", also derart ausgestaltet oder ausgelegt, dass diese (direkte) Verbindung von Spiegelschale und Reflektionskörper selbsthaltend ist.

Dass Reflektionskörper und Spiegelschalenrand "bündig miteinander abschließen" wird zunächst durch die hilfsmittelfreie Verbindung zwischen Reflektionskörper und Spiegelschalenrand erleichtert, da keine mechanischen Hilfsmittel, also beispielsweise Rastnasen, Rastnuten oder dergleichen randseitig in die reflektierende Fläche des Reflektionskörpers hinein ragen. "Bündig" ist hierbei zunächst so zu verstehen, dass bei optimalen Gegebenheiten der Spiegelschalenrand praktisch stufenlos, also ohne Ebenenversatz in die Fläche des Reflektionskörpers übergeht. Es liegt somit kein Überstand des Reflektionskörpers über den Spiegelschalenrand hinaus und auch kein Zurückspringen des Reflektionskörpers bzw. dessen reflektierender Fläche unter die Ebene des Spiegelschalenrands in die Spiegelschale hinein vor, wie dies beim oben genannten Stand der Technik der Fall ist. Damit ist praktisch die gesamte reflektierende Fläche frei aus allen Seiten unter allen Winkeln ohne Abschattung einsehbar. Weiterhin ist dieser glatte Übergang aerodynamisch sauber, das heißt, es können sich keine toten Winkel oder Hinterschneidungen bilden, an denen Verwirbelungen für Schmutzablagerungen sorgen könnten. Auch treten keine Strömungsgeräusche auf.

"Bündig" bedeutet aber weiterhin, dass auch im Fall von Toleranzschwankungen bzw. Toleranzabweichungsaddierungen zur ungünstigen Seite hin und/oder im Fall von z.B. thermisch bedingten Lageverschiebungen zwischen Reflektionskörper und Spiegelschale bzw. Spiegelschalenrand die erfindungsgemäß angestrebten Vorteile, insbesondere die weitestgehend vollständige zur Verfügungsstellung der reflektierenden Fläche oder Spiegelfläche beibehalten bleiben. Hierbei sind die thermisch bedingten Lageverschiebungen zwischen Reflektionskörper und Spiegelschale bzw. Spiegelschalenrand z.B. aufgrund unterschiedlicher Ausdehnungskoeffizienten durch die nicht lösbare Verbindung zwischen Reflektionskörper und Spiegelschale im Bereich der dortigen Aufnahmeöffnung ohnehin weitestgehend unterbunden und damit praktisch vernachlässigbar.

Der Begriff "bündig" ist somit im Rahmen der vorliegenden Erfindung sowohl als "exakt bündig" als auch als "im Wesentlichen bündig" zu verstehen bzw. zu interpretieren. Da Lageveränderungen, insbesondere Änderungen in der Höhenlage, zwischen Reflektionskörper und Spiegelschale (Spiegelschalenrand) auch bei ungünstigsten Toleranzabweichungsaddierungen und/oder thermisch bedingten Verformungen nur sehr gering ausfallen, kann im Rahmen der vorliegenden Erfindung "im Wesentlichen bündig" als Äquivalent zu "exakt bündig" betrachtet werden und umgekehrt. Thermisch bedingte Verformungen treten seitens der Siegelschale durch Ausdehnungs- und Schrumpfbewegungen im täglichen Betrieb, sowie durch Schrumpfverformungen im Zuge der Herstellung der Spiegelschale durch beispielsweise Spritzguss auf, wobei die frisch ausgeformte Spiegelschale beim Erkalten schrumpfen kann. Speziell der letztere Schrumpfungsvorgang kann aber vorherberechnet und konstruktionstechnisch vorab kompensiert werden. Weitere Lageveränderungen, insbesondere Änderungen in der Höhenlage, zwischen Reflektionskörper und Spiegelschale (Spiegelschalenrand) können von dem Reflektionskörper induziert werden und hängen von dessen Material, Homogenität (z.B. laminiert bzw. geschichtet oder einstückig), Abmessungen (insbesondere Dicke) und auch von der Wölbung des Reflektionskörpers ab. Auch diese Lageveränderungen oder Verformungen sind zumindest annähernd berechenbar und damit vorhersagbar und können schon im Vorfeld konstruktionstechnisch abgefangen oder kompensiert werden.

Bevorzugt kann die Verbindung zwischen Reflektionskörper und Spiegelschale mittels einer Klebeverbindung erfolgen. Durch den Einsatz moderner Klebestoffe sind derartige Klebeverbindungen alterungs- und witterungsbeständig. Darüber hinaus können derartige Klebeverbindungen bis zu einem gewissen Grad vibrationsdämpfend ausgelegt werden und es kann unterschiedlichen thermischen Ausdehnungskoeffizienten zwischen Spiegelschale und Reflektionskörper Rechnung getragen werden bzw. unterschiedliche Ausdehnungsbeträge von Spiegelschale und Reflektionskörper und damit einhergehende Verspannungen insbesondere des Reflektionskörpers können aufgefangen werden. Allerdings stellt eine Verklebung einen weiteren Faktor dar, der die bündige Ausrichtung zwischen Spiegelschale (Spiegelschalenrand) und Reflektionskörper erschweren kann, da unterschiedliche Kleberbettdicken diese bündige Ausrichtung in Frage stellen kann. Sorgfalt bei der Aufbringung des Klebers und konstruktionstechnische Maßnahmen wie z.B. Ausweichmöglichkeiten von Kleberüberschuss in Form von Sicken oder Rillen kann dem erfolgreich begegnen.

Gemäß einer bevorzugten Ausgestaltungsform kann der Reflektionskörper ein Spiegelglas mit einer zumindest abschnittsweise reflektierenden Fläche sein. "Zumindest abschnittsweise reflektierend" ist hierbei im Rahmen der vorliegenden Erfindung so zu verstehen, dass die reflektierende Fläche des Spiegelglases einen oder auch mehrere Abschnitte ohne oder mit verringerter Reflektionsleistung haben kann, jedoch nicht haben muss, wobei sich hinter derartigen Bereichen oder Abschnitten dann beispielsweise Anzeigeelemente, Licht emittierende Elemente oder dergleichen befinden.

Alternativ kann der Reflektionskörper ein Kunststoffteil mit einer zumindest abschnittsweise reflektierenden Fläche sein.

Bevorzugt weist die Spiegelschale eine komplementär zum Reflektionskörper ausgeführte Auflagefläche auf, welche wenigstens teilweise mit dem Reflektionskörper (nicht lösbar) verbunden ist. Insbesondere bei der Verwendung einer Klebeverbindung zwischen Reflektionskörper und Spiegelschale wird hiermit ausreichend Verklebungsfläche sichergestellt.

Besagte Auflagefläche kann ein im Bereich des Spiegelschalenrandes zumindest abschnittsweise ausgeführter umlaufender Steg sein. Mit anderen Worten, es ist nicht notwendig, den Reflektionskörper mit einer entsprechenden (vollflächig wirkenden) Auflagefläche seitens der Spiegelschale zu verkleben, da dies fertigungstechnisch einen erhöhten Aufwand darstellen würde. Weiterhin würde durch eine vollflächige Auflagefläche das Gewicht der Spiegelschale unnötig erhöht werden.

Der Steg kann hierbei segmentartig ausgebildet sein, also nur an bestimmten Abschnitten des Spiegelschalenrandes ausgebildet sein, beispielsweise in Eckbereichen der Spiegelschale.

In einer qualitativ möglichst hochwertigen Verbindung zwischen Spiegelschale und Reflektionskörper folgt der Steg bzw. folgen die Stegsegmente der Kontur des hiermit zu verbindenden Reflektionskörpers.

Als eine konstruktive Alternative oder auch Ergänzung zur Ausbildung der Auflagefläche in Form eines segmentierten oder auch durchgehenden Stegs kann die Auflagefläche durch wenigstens einen Vorsprung oder Dom gebildet werden, welcher vom Spiegelschalengrund vor steht und dessen freie Endoberfläche mit dem Reflektionskörper (der Reflektionskörperrückseite) verbunden ist. Unter Beibehaltung einer Gewicht sparenden Ausgestaltung ist hierdurch eine besser über die Fläche verteilte Verbindung zwischen Spiegelschale und Reflektionskörper möglich.

Die Spiegelschale kann eine oder mehrere Auflagerippen aufweisen, mit welchen der Reflektionskörper vor der Verbindung mit der Spiegelschale positionierbar ist. Dies erleichtert die Herstellung des erfindungsgemäßen Spiegels.

Die Spiegelschale kann gegenüber der Halteeinrichtung, mit der diese wiederum an einem Fahrzeug bzw. Fahrzeugkarosserieteil befestigbar ist, mittels einer Verstelleinrichtung verstellbar sein, wie dies an sich bekannt ist.

Weiterhin kann bevorzugt die Spiegelschale ein Kunststoffteil sein, so dass sie einer automatisierten Fertigung, beispielsweise im Spritzgussverfahren oder Tiefziehverfahren zugänglich ist.

Weitere Einzelheiten, Aspekte und Vorteile der vorliegenden Erfindung ergeben sich besser aus der nachfolgenden Beschreibung von Ausführungsformen anhand der Zeichnung.

Es zeigt:
Fig. 1 perspektivisch und in auseinander gezogener Darstellung eine Ansicht auf ein erfindungsgemäßes Spiegelsystem;
Fig. 2 eine Rückansicht auf das erfindungsgemäße Spiegelsystem bzw. die dortige Spiegelschale samt Halteeinrichtung;
Fig. 3 eine Seitenansicht auf das erfindungsgemäße Spiegelsystem;
Fig. 4 eine Schnittdarstellung entlang Linie A-A in Fig. 3;
Fig. 5 eine Draufsicht auf eine Spiegelschale gemäß einer Ausführungsform;
Fig. 6 eine Draufsicht auf die Spiegelschale gemäß einer weiteren Ausführungsform; und
Fig. 7 eine Draufsicht auf die Spiegelschale gemäß noch einer weiteren Ausführungsform.

Die Darstellungen in den einzelnen Figuren der Zeichnung sind zueinander nicht maßstäblich. Weiterhin stellen die einzelnen Figuren der Zeichnung lediglich exemplarische Ausführungsformen und keine konkreten Einschränkungen des Erfindungsgegenstands dar.

Ein in der Zeichnung insgesamt mit 2 bezeichnetes Spiegelsystem umfasst im dargestellten Ausführungsbeispiel im Wesentlichen einen Reflektionskörper 4, der plattenförmig/flach ausgebildet ist und eine im Raum gekrümmte Form haben kann. Der Reflektionskörper 4 kann beispielsweise eine Glas- oder Kunststoffplatte sein, welche einseitig reflektierend beschichtet, beispielsweise bedampft ist. In der nachfolgenden Beschreibung wird der Reflektionskörper 4 auch als "Spiegelscheibe" bezeichnet.

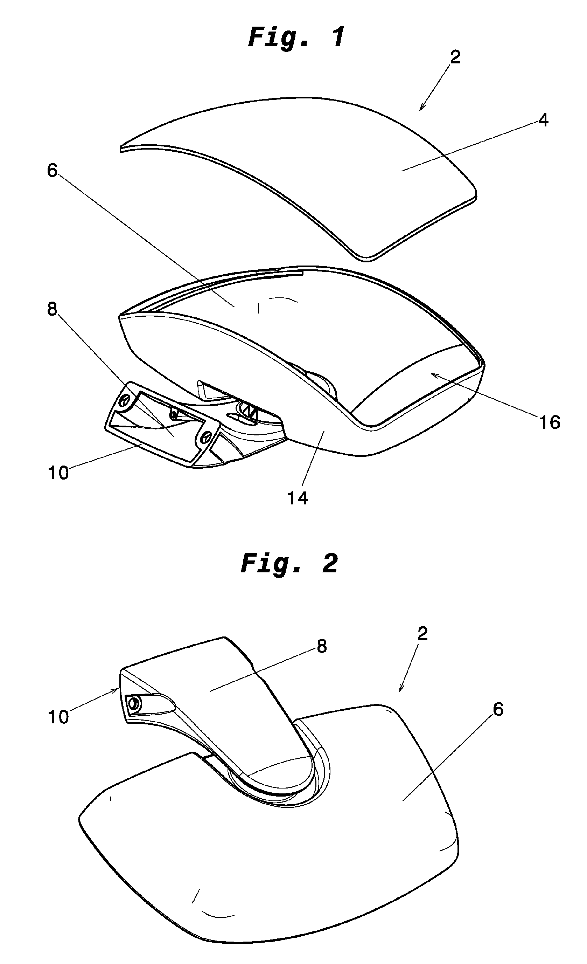

Eine Spiegelschale 6 dient zur Aufnahme und Befestigung der Spiegelscheibe 4. Die Spiegelschale 6 ist mit einer Halteeinrichtung 8 versehen, welche beispielsweise die in den Figuren 4 und 2 gezeigt Arm- oder Auslegerform haben kann und mit einem Ende - bevorzugt verstellbar - an der Spiegelschale 6 befestigt ist und am anderen Ende einen Haltefuß 10 aufweist, mit welchem die Halteeinrichtung 8 beispielsweise an einem Fahrzeugkarosserieteil befestigbar ist.

Wie weiterhin aus der Zeichnung und hier insbesondere aus den Figuren 1 sowie 4 bis 7 hervorgeht, hat die Spiegelschale 6 eine flache Trog- oder Schalenform mit einer Bodenfläche 12 und hiervon umfangsseitig umlaufend und nach oben vorstehenden Seitenwänden, welche zusammenfassend mit dem Bezugszeichen 14 bezeichnet sind. Die Spiegelschale kann somit mit Ausnahme einer oberen Aufnahmeöffnung als im Wesentlichen geschlossenwandig betrachtet werden. In besagte, der Bodenfläche 12 gegenüberliegende, Aufnahmeöffnung der Spiegelschale 6 wird ausweislich der Figuren 1, 3 und 4 die Spiegelscheibe 4 eingelegt oder eingesetzt und befestigt. Hierzu weist der obere umlaufende Rand der Spiegelschale einen zumindest abschnittsweise ausgeführten Steg 16 auf, auf dessen Oberseite die Rückseite der Spiegelscheibe 4 zu liegen kommt. Wie insbesondere aus den Figuren 1 und 4 hervorgeht, ist hierbei der Steg 16 vom oberen freien Rand der Seitenwand 14 um einen Betrag nach unten in Richtung Bodenfläche 12 zurückgesetzt, der der Dicke oder Materialstärke der Spiegelscheibe 4 im Wesentlichen entspricht, so dass der Übergang zwischen der Spiegelscheibe 4 und dem Material der Spiegelschale 6 im Bereich des oberen Rands der Seitenwand 14 im Idealfall vollständig ohne Stufe oder Höhenversatz, d.h. völlig bündig/glatt ist.

In der Praxis wird der Übergang zwischen der Spiegelscheibe 4 und dem Material der Spiegelschale 6 im Bereich des oberen Rands der Seitenwand 14 im Wesentlichen bündig sein. Dies bedeutet, dass im Fall von Toleranzschwankungen bzw. Toleranzabweichungsaddierungen zur ungünstigen Seite hin und/oder auch im Fall von z.B. thermisch bedingten Lageverschiebungen eine minimale Stufenbildung zwischen Reflektionskörper und Spiegelschale bzw. Spiegelschalenrand auftreten kann, ohne dass hierbei die erfindungsgemäß angestrebten Vorteile, insbesondere die weitestgehend vollständige zur Verfügungsstellung der reflektierenden Fläche oder Spiegelfläche verloren gehen würden. Insbesondere sind es hierbei die thermisch bedingten Lageverschiebungen zwischen Reflektionskörper und Spiegelschale bzw. Spiegelschalenrand z.B. aufgrund unterschiedlicher Ausdehnungskoeffizienten, die durch die nicht lösbare Verbindung zwischen Reflektionskörper und Spiegelschale im Bereich der dortigen Aufnahmeöffnung ohnehin weitestgehend unterbunden und damit praktisch vernachlässigbar sind, so dass letztendlich nur vorherseh- und berechenbare und damit beherrschbare Herstellungs- und Fertigungstoleranzschwankungen zu berücksichtigen sind.

In zumindest Teilabschnitten des Anlagebereichs zwischen der Unterseite der Spiegelscheibe 4 und der Oberseite des Stegs 16 erfolgt eine Verbindung von Spiegelscheibe 4 und Steg 16 und damit Spiegelschale 6 durch eine Verklebung 18.

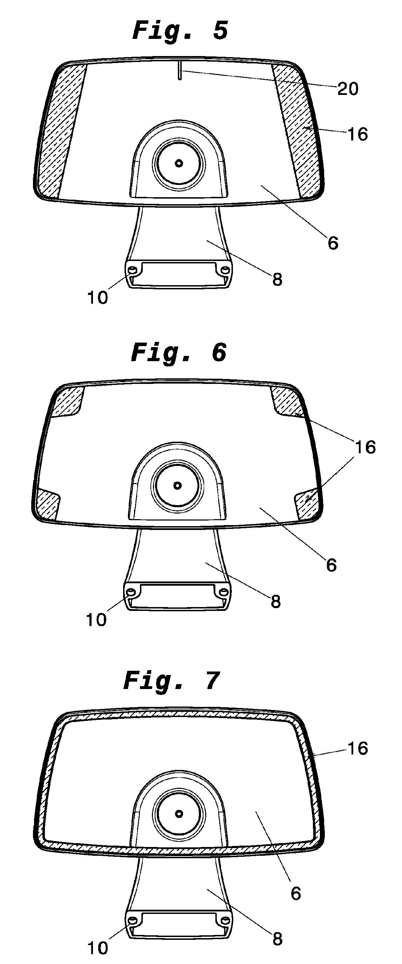

Der Steg 16 kann vollständig entlang des gesamten oberen offenen Randes der Seitenwand 14 der Spiegelschale umlaufend ausgebildet sein. Bevorzugt ist jedoch der Steg 16 abschnittsweise bzw. segmentiert ausgebildet, und erstreckt sich beispielsweise gemäß der Figuren 1 und 5 entlang zweier Seitenabschnitte der Spiegelschale 6, beispielsweise bei einer rechteckförmigen oder trapezförmigen Ausgestaltung der Spiegelschale 6 in Draufsicht (vgl. Fig. 5 bis 7) entlang der beiden kurzen Seiten des Trapezes oder Rechtecks.

Gemäß Fig. 6 kann der Steg 16 auch soweit segmentiert sein, dass er nur in den vier Eckbereichen der Spiegelschale 6 vorhanden ist.

Fig. 7 zeigt die Ausgestaltung des Stegs 16 derart, dass dieser entlang des gesamten offenen Randes der Spiegelschale 6 umlaufend ausgebildet ist. Da bei der Ausführungsform von Fig. 7 eine umlaufende Verbindung, d.h. Verklebung von Spiegelscheibe 4 und Spiegelschale 6 bzw. Steg 16 erfolgt, steht bei der Ausführungsform von Fig. 7 der Steg 16 weniger weit in das Innere der Spiegelschale 6 vor.

Ungeachtet der jeweiligen Ausgestaltung des Stegs 16 bildet dieser entlang von Teilabschnitten oder auch entlang der gesamten Länge des offenen Randes der Spiegelschale 6 eine Verstärkung, welche insbesondere ein seitliches Einknicken des offenen Randes in das Innere der Spiegelschale 6 verhindert.

Fig. 5 zeigt eine Auflagerippe 20, welche zusätzlich zu dem Steg oder den Stegen 16 vorgesehen sein kann. Diese Auflagerippe 20 (wobei deren Anzahl und Verteilung entlang des Umfangs der Spiegelschale 6 beliebig sein kann), stellt eine zusätzliche Positionierhilfe und Abstützung der Spiegelscheibe 4 dar. Auf eine Verklebung zwischen Spiegelscheibe 4 und Rippe oder Rippen 20 kann in der Regel verzichtet werden.

Zur Verklebung zwischen Spiegelscheibe 4 und Spiegelschale 6 im Bereich des Stegs 16 oder der Stege 16 kommen bevorzugt Klebstoffe zum Einsatz, welche gegenüber den in der Praxis auftretenden Belastungen beständig sind, also insbesondere Alterungsbeständigkeit, UV-Beständigkeit, Vibrationsbeständigkeit etc. haben.

Beim Gegenstand der vorliegenden Erfindung ist die gesamte reflektierende Fläche der Spiegelscheibe 4 (des Reflektionskörpers) voll ausnutzbar, da keine randseitigen spiegelschalenseitigen Halteelemente wie Klipse, Klemmringe oder dergleichen in die reflektierende Fläche der Spiegelscheibe 4 hineinragen. Hierdurch kann das Spiegelglas bzw. die Spiegelscheibe 4 so klein wie möglich ausgeführt werden, da keine über den eigentlichen Bedarf hinausgehende Vergrößerung der reflektierenden Fläche notwendig ist. Durch die sich hierdurch ergebende Materialeinsparung seitens der Spiegelscheibe 4 fallen weniger Kosten, geringeres Gewicht und eine kleinere Spiegelkopfgröße insgesamt an.

Da die Spiegelscheibe 4 direkt mit den Stegen 16 bzw. dem Steg 16 verbunden, insbesondere verklebt wird, sind Längen- und Breitentoleranzabweichungen der Spiegelscheibe 4 und/oder der Spiegelschale 6 für die eigentliche Haltefunktion im Gegensatz zu Spiegeln mit Rast- oder Schnappfunktionen im Wesentlichen ohne Belang.

Durch die Ausbildung des abschnittsweise oder vollständig umlaufenden Stegs 16 am oberen freien Rand der Spiegelschale 6 erhält die Spiegelschale 6 eine erhöhte Steifigkeit und Vibrationsbeständigkeit. Schließlich liegt ein direkter Kraftfluss zwischen Spiegelscheibe 4, Spiegelschale 6 und Halteeinrichtung 8 vor, was das erfindungsgemäße Spiegelsystem 2 insgesamt widerstandsfähiger vor äußeren Krafteinwirkungen macht.

Die Anzahl der Reflektionskörper oder Spiegelscheiben 4 ist nicht auf einen oder eine beschränkt. Es ist im Rahmen der vorliegenden Erfindung auch möglich, beispielsweise zwei derartige Spiegelscheiben in einer gemeinsamen Aufnahmeöffnung anzuordnen. Die einzelnen Spiegelscheiben können sich hierbei z.B. in ihrer Reflektionsrichtung, ihrer Ausstattung, oder in anderen optischen und/oder mechanischen Eigenschaften unterscheiden.

## Patentansprüche

1. Spiegelsystem für Fahrzeuge, insbesondere für Nutzfahrzeuge,
- mit einer mit Ausnahme einer Aufnahmeöffnung für wenigstens einen Reflektionskörper (4) im Wesentlichen geschlossenwandigen Spiegelschale (6), die eine Schnittstelle zu einer am Fahrzeug befestigbaren Halteeinrichtung (8, 10) aufweist; und
- dem Reflektionskörper (4), der an der Spiegelschale (6) im Bereich der dortigen Aufnahmeöffnung angebracht ist
**dadurch gekennzeichnet, dass**
die Spiegelschale (6) und der Reflektionskörper (4) nicht lösbar miteinander verbunden sind.

2. Spiegelsystem nach Anspruch 1, **dadurch gekennzeichnet, dass** der Reflektionskörper (4) und die Spiegelschale (6) mittels einer Klebeverbindung (18) verbunden sind.

3. Spiegelsystem nach Anspruch 1 oder 2, **dadurch gekennzeichnet, dass** der Reflektionskörper (4) und der Spiegelschalenrand bündig miteinander abschließen.

4. Spiegelsystem nach einem der Ansprüche 1 bis 3, **dadurch gekennzeichnet, dass** der Reflektionskörper (4) ein Spiegelglas mit einer zumindest abschnittsweise reflektierenden Fläche ist.

5. Spiegelsystem nach einem der Ansprüche 1 bis 3, **dadurch gekennzeichnet, dass** der Reflektionskörper (4) ein Kunststoffteil mit einer zumindest abschnittsweise reflektierenden Fläche ist.

6. Spiegelsystem nach einem der Ansprüche 1 bis 5, **dadurch gekennzeichnet, dass** die Spiegelschale (6) eine komplementär zum Reflektionskörper (4) ausgeführte Auflagefläche aufweist, die wenigstens teilweise mit dem Reflektionskörper (4) verbunden ist.

7. Spiegelsystem nach Anspruch 6, **dadurch gekennzeichnet, dass** die Auflagefläche ein im Bereich des Spiegelschalenrandes zumindest abschnittsweise ausgeführter umlaufender Steg (16) ist.

8. Spiegelsystem nach Anspruch 7, **dadurch gekennzeichnet, dass** der Steg (16) segmentartig ausgebildet ist.

9. Spiegelsystem nach Anspruch 7 oder 8, **dadurch gekennzeichnet, dass** der Steg (16) der Kontur des hiermit zu verbindenden Reflektionskörpers (4) folgt.

10. Spiegelsystem nach Anspruch 6, **dadurch gekennzeichnet, dass** die Auflagefläche durch wenigstens einen Dom gebildet wird, welcher vom Spiegelschalengrund vorsteht und dessen freie Endoberfläche mit dem Reflektionskörper (4) verbunden ist.

11. Spiegelsystem nach einem der Ansprüche 1 bis 10, **dadurch gekennzeichnet, dass** die Spiegelschale (6) Auflagerippen (20) zur Positionierung des Reflektionskörpers (4) besitzt.

12. Spiegelsystem nach einem der Ansprüche 1 bis 11, **dadurch gekennzeichnet, dass** die Spiegelschale (6) gegenüber der Halteeinrichtung (8, 10) mittels einer Verstelleinrichtung verstellbar ist.

13. Spiegelsystem nach einem der Ansprüche 1 bis 12, **dadurch gekennzeichnet, dass** die Spiegelschale (6) ein Kunststoffteil ist.
